Europäisches Patentamt

(19) European Patent Office

Office européen des brevets

(11) Publication number: **0 307 024**
**A1**

## EUROPEAN PATENT APPLICATION

(21) Application number: 88201767.6

(51) Int. Cl.⁴: **C09D 9/04**

(22) Date of filing: 18.08.88

(30) Priority: 03.09.87 DE 3729446

(43) Date of publication of application:
15.03.89 Bulletin 89/11

(84) Designated Contracting States:
AT BE CH DE ES FR GB GR IT LI LU NL SE

(71) Applicant: AKZO N.V.
Velperweg 76
NL-6824 BM Arnhem(NL)

(72) Inventor: Jansen, Georg
Am Mortes 5
D-5166 Kreuzau(DE)
Inventor: Tervoort, Jan
Vrusschemigerweg 111
NL-6417 PJ Heerlen(NL)

(74) Representative: Sieders, René et al
AKZO N.V. Patent Department (Dept. CO)
P.O. Box 9300
NL-6800 SB Arnhem(NL)

(54) De-inking agent for waste paper.

(57) The agent to be used for de-inking waste paper in the form of, for instance, old newspapers, pictorials, and the like, is an aqueous fatty acid-containing anionic dispersion which essentially contains saturated fatty acids, anionic surfactants as well as mono- and/or diesters of polyvalent alcohols of fatty acids having an HLB value of from about 3 to about 7. A preferred fatty acid is palmitic acid. A particularly suitable ester is commercial glycerin monostearate having a monoester content of 45-60 %. Use of the agent in de-inking results in a considerable improvement of the degree of whiteness of the remaining fibres and a reduction in the fibre losses during flotation. The agent may with advantage be used in continuous operation at a high recirculation rate of the process water.

EP 0 307 024 A1

## De-inking agent for waste paper

### Description

The invention relates to an agent in the form of an aqueous anionic dispersion for de-inking in particular printed waste paper, a process for the preparation thereof as well as the use of the agent in de-inking waste paper.

Processes for de-inking waste paper, i.e., processes for removing printing ink from waste paper have been known for a long time. DE-PS 396 071, for instance, describes how printed paper is converted into a pulp by a treatment with hot water and a mixture of oleic acid and sulphonated sodium ricinate. In this process the liquid and soluble components of printing ink go into solution. By the addition of toluene, xylene, or other liquid hydrocarbons, the carbons and pigments are taken up and subsequently removed in a centrifugal filter.

For reasons of environmental protection and the conservation of natural resources efforts have been greatly intensified, especially in the last few years, to recycle waste paper and use it for the manufacture of new paper. For this reason, suitable de-inking processes are becoming increasingly important.

De-inking is frequently carried out by a process in which higher fatty acids and dispersing agents are added to the pulp and the detached printing ink particles are removed from the fibre suspension by flotation.

In such a process use is mainly made of de-inking agents which in addition to other constituents contain unsaturated fatty acids. Thus, a fatty acid often used is oleic acid or use is made of mixtures of fatty acids containing a higher or lower proportion of unsaturated acids. Also recommended for de-inking are resinic acids. DE-PS 31 23 353 discloses a process for de-inking printed waste paper in which fatty acids and/or resinic acids and the dispersing agents are added in the form of an oil in water emulsion. It follows from the examples that use is made of oleic acid, tall oil distillates containing 20 to 30 % of resinic acid, or mixed fatty acids.

Saturated fatty acids are known to be especially effective de-inking agents. On the whole, however, saturated fatty acids such as stearic acid or palmitic acid can only be coarsely dispersed in the alkalized water of the pulper and are only partially saponified, so that only part of the fatty acid will be active in the de-inking process.

Stürmer and Ulubay disclose in Wochenblatt für Papierfabrikation, 1982, 20, pp. 741-2, that de-inking agents are advantageously prepared by emulsifying saturated fatty acids in water to which small amounts of surfactants were added. They fail to mention any specific requirement for the type of surfactants to be used. The Derwent-abstract No. 84-078870/13 discloses a de-inking composition containing saturated fatty ester and as surfactants a combination of polyethoxylated fatty alcohols being rather hydrophilic on the HLB balance and anionic sulfonated polyethoxy fatty alcohols.

However, the additional use of non-ionic dispersing agents such as oleic polyglycol esters or ethoxylated fatty acid mono- and/or diglycerides, or of anionic dispersing agents such as fatty alcohol polyglycol ether sulphates, olefin sulphonates, or sulphosuccinic dialkyl esters has not led to quite satisfactory results either as far as the dispersion and saponification of fatty acids in de-inking and the effectiveness of the de-inking process are concerned.

There is, therefore, still need for de-inking agents consisting of dispersions of fatty acids which exhibit improved properties, as well as for improved de-inking processes.

The invention has for its object to provide an agent in the form of an aqueous anionic dispersion for the de-inking of in particular printed waste paper, in which dispersion the active component consists essentially or exclusively of saturated fatty acids, which agent is particularly finely divided and can be well dispersed in the pulp without the agglomeration of fatty acid. The invention also has for its object to provide an advantageous process for the preparation of such a de-inking agent. Furthermore, the invention has for its object to provide a process for de-inking waste paper which leads to paper fibres having a high degree of whiteness and is attended with a minimum loss of fibres during flotation.

In addition, the invention has for its object to provide a process for de-inking waste paper that can be carried out in continuous operation without being attended with a gradual decrease of the degree of whiteness of the recycled fibres, as is the case in the usual process. The invention further has for its object to provide a process in which there is little loss of the water fed into the circuit.

To solve this problem use is made for de-inking waste paper of an agent in the form of an aqueous fatty acid-containing anionic dispersion, characterized in that the dispersion essentially contains saturated fatty acids, anionic surfactants as well as mono- and/or diesters of polyvalent alcohols of fatty acids having an HLB value of from about 3 to about 7. Preferably, the dispersion contains as esters glycerin mono- and/or glycerin diesters of saturated carboxylic acids. A very suitable glycerin monoester is commercial glycerin in monostearate having a monoester content of about 45 -60% Of the ester up to 40 mole per cent may be substituted with alkyl ester of carboxylic acids, more particularly isopropyl stearate or isopropyl palmitate. A particularly suitable saturated fatty acid is palmitic acid. As anionic surfactant the dispersion preferably contains sodium salts of α-olefin sulphonates. For the object envisaged use is also made of a process for preparing a waste paper de-inking agent in the form of an aqueous, fatty acid-containing anionic dispersion, characterized in that essentially saturated fatty acids and mono- and/or diesters of polyvalent alcohols of fatty acids having an HLB value of from about 3 to about 7 are processed into a homogeneous melt which is homogeneously mixed with an anionic surfactant-containing aqueous solution. Mixing may with advantage be carried out by introducing the melt into the aqueous anionic surfactant solution and dispersing the fatty acid by stirring. Stirring is carried out in a commonly applied inclined blade stirrer having a stirring blade/vessel diameter ration of 0,5 - 0,7, at a number of revolutions corresponding to a circumferential speed of 2,5 to 5,5 m/sec.

The agent according to the invention is above all suited to be used for de-inking printed waste paper in the form of, for instance, old papers, pictorials, and the like.

The de-inking agent is preferably used in a de-inking process in which in the pulper the de-inking agent is added to a waste paper suspension containing caustic soda, water glass, complexing agent, and hydrogen peroxide, and optionally any further common additives.

The preparation of the agent according to the invention is generally so carried out that first of all a melt is prepared from the fatty acid and the mono- or diester.

As fatty acids are particularly suitable saturated fatty acids having 12-18 carbon atoms, preference being given to fatty acids having 16-18 carbon atoms, more particularly the palmitic acids.

For instance, use may be made of distilled 92 % palmitic acid having a maximum iodine number of 2, hydrogenated palm fatty acid having about 60% of C16 and about 40 % of C18 acids and a maximum iodine number of 2, distilled palm oil fatty acids, less than 20 % of which is unsaturated as well as mixtures thereof and other saturated fatty acids.

The fatty acid used contains unsaturated constituents only to a minor degree. Preferably, said fatty acid should be free of unsaturated constituents such as oleic acid, ricinoleic acid, and the like.

The fatty acids may be employed both in the form of naturally occurring compounds, from which the undesirable constituents may optionally have been separated, and in the form of synthetically prepared products. Unsaturated compounds, such as oleic acid, may be hydrated into saturated compounds.

The mono- and/or diesters of polyvalent alcohols of fatty acids used according to the invention are generally commercially available products or may be prepared synthetically in a simple manner. They have no ionic groups nor do they contain polyether groups obtained by alkoxylation.

Especially suitable mono- or diesters of polyvalent alcohols of fatty acids are the mono- or diesters of the glycerin. Such compounds are also available commercially. Particularly suited to be used is commercial glycerin monostearate, which contains about 45-60 % of mono ester and up to 40 % of diester.

Particularly suited are mixtures of mono- and diesters of polyvalent alcohols.

In addition to the above-mentioned mono- and diglycerides of stearic acid the corresponding glycerides of palmitic acid are particularly suitable also.

The mono- and/or diesters of polyvalent alcohols of fatty acids used according to the invention have HLB values of from about 3 to about 7. The HLB value is a dimensionless number according to Griffin and is indicative of the water and oil solubility of the compound. It provides information about the hydrophilic-hydrophobic equilibrium of the compound. Further particulars on the HLB value are to be found in Ullmann's Encyklopaedie der technischen Chemie 4, revised and enlarged edition, Vol. 10, Verlag Chemie Weinheim/Bergstrasse, p. 462 ff.

A part, viz. about 20 to 40 mole % of the esters, more particularly of the glycerin esters may be substituted with alkyl esters of carboxylic acids, preference being given to alkyl esters of monocarboxylic acids. Particularly suited are alkyl esters of the formula $RCOOR'$, wherein R and $R'$ are linear or branched alkyl groups and R represents groups having 1-4 and $R'$ represents groups having 11-17 carbon atoms. Preferred substituting compounds are isopropyl stearate and isopropyl palmitate, which are commercially available.

In the preparation of the melt the two components may first be melted separately and then mixed together. However, it is also possible for the two components to be melted together. Preferably the melt, after proper homogenization by adequate stirring, will slowly be introduced into an aqueous anionic surfactant solution.

In addition to the principal constituent water the aqueous anionic surfactant solution contains an anionic surfactant, more particularly preferably in an amount such that in the ready de-inking agent is is present in a proportion of about 0,2 to 0,5% by weight.

Particularly suitable anionic surfactants are $\alpha$-olefin sulphonates. $\alpha$-olefin sulphonates are commercially available products such as Elfan OS 46, a sodium salt of $\alpha$-olefin sulphonates having 14-16 carbon atoms, marketed by Akzo Chemie GmbH, Dueren.

Instead of $\alpha$-olefin sulphonates, which are preferred, there may be employed ether sulphates or other anionic surfactants; the sulphates are preferably used in the form of their sodium salt.

When the melt is introduced into the aqueous surfactant solution, which preferably has been heated to a temperature of about 70° to 90°C, the mixture need be properly stirred. Next, the mixture is cooled to room temperature with continued stirring.

No high shearing forces are required for dispersion, so that it is not necessary to use high speed homogenizers. Proper dispersion may be achieved with the use of propeller or inclined blade stirrers at a number of revolutions corresponding to a circumferential speed of 2,5 to 6 m/sec. A particularly advantageous stirring device is found to be a two-stage trapezoidal stirrer with a ratio of stirring blade diameter to vessel diameter of 0,6 - 0,7.

Depending on the concentration of the fatty acid used along with the ester as well as on the ingredients in the anionic aqueous solution dispersions within a wide viscosity range may be attained. Preference is given to dispersions having a viscosity of 30 to 80 mPa.s. The concentration of fatty acid in the dispersion may vary within wide limits. Suitable concentrations are for instance those in the range of 20 to 40 % by weight, although it should be taken into account that the viscosity will increase with increasing concentrations, in which case surfactants of higher concentrations will have to be added. It is therefore recommended that use should be made generally of relatively low concentrations of fatty acid, for instance of up to about 25 %.

The ratio of fatty acid to mono- or diesters of polyvalent alcohols of fatty acids is preferably in the range of 15:1 to 5:1. It is preferred that the concentration of mono- or diester in the dispersion should be about 1 to 6 %.

Dispersions according to the invention are very stable and may be stored for prolonged periods. The size of the dispersed particles is generally in the range of about 5 - 30 $\mu$m. Dispersions of this kind are especially suited to be fed with conventional metering pumps.

The de-inking dispersions according to the invention may be used directly in the de-inking process.

The dispersion according to the invention is suitable for de-inking common waste paper, more particularly printed waste paper in the form of, for instance, old newspapers, pictorials, books, and the like. It can also be advantageously used in the processing of blends of newspaper and pictorial paper.

The dispersion according to the invention may be employed in usual de-inking processes. It is particularly suitable for use in de-inking processes in which the pulp in addition to pulverized waste paper contains water, caustic soda, water glass, hydrogen peroxide, and a complexing agent. Preferably used complexing agents are sodium salt of diethylene triaminopentacetate (DTPA, a commercially available product). The complexing agent serves to complex any heavy metal ions that may be present, in order to reduce undesired decomposition of the hydrogen peroxides.

Thus, for instance, the dispersion according to the invention may be added to the alkaline fibre dispersion in an amount of 0,3 - 0,5 % by weight, calculated as solid matter and based on the waste paper used. In this process the finely divided fatty acid is rapidly formed into sodium soap. The hardening constituents of the water cause the sodium soap to be partially formed into lime soap, which is obtained in very fine flakes. These fine flakes act as selective collectors for the printing ink and prevent redeposition of these pigment particles on the paper fibres.

The printing ink particles separated from the paper fibres are removed from the pulp by flotation, the foam entraining the pigment particles during flotation.

As a rule, flotation takes place at a consistency of about 0,7 - 1 % and a water hardness of about 12 - 16° dH (German hardness). The temperature in the flotation cells in in the range of 30° to 45°C, and the flotation pro cess takes about 10 - 15 minutes. When the foam formed has been freed from the accumulated pigment particles, it is subjected to after-flotation. The concentrated solids constituents may be dumped or burnt, in so far as they are not used for other purposes.

It was particularly surprising that the dispersion according to the invention proved to be especially advantageous in the flotation in that the effectiveness of the fatty acid compared with that obtained by the prior art methods has improved and less time is needed to free cellulose fibres of printing ink. The degree of whiteness of the remaining fibres has improved and is generally 4 to 5 points higher than may be obtained with the processes known up to now. Also surprisingly, according to the invention the fibre portion which is entrained with the pigments in the flotation can be considerably reduced, so that a considerably higher yield of regenerated fibres is obtained.

When the fatty acids are added in the molten state or as a soap, larger particles will form than in the procedure according to the invention, and the superficially flocculated lime soap will enclose unsaponified fatty acid or soap particles. Unsaponified fatty acids will stick to the fibres and because of their hydrophobation they will give rise to higher fibre losses in the flotation.

A further advantage according to the invention over other processes resides in the use of saturated fatty acids of which only a small proportion is unsaturated and a carefully selected emulsifier system preventing accumulation of surface active constituents in the recirculation water. Accumulation of surfactants may cause interruptions in a continuous process.

As considerable amounts of water are in circulation in the de-inking process, said process is carried out in properly closed circuits to reduce water consumption to a minimum. The loss of water is extremely low and is about 5 to 10 %. In the known processes in such closed circuit operation not only properly soluble surface active constituents such as hydrophilic ethoxylated fatty acids, ethoxylated fatty alcohols, ethoxylated fatty acid glycerin esters, anionic surfactants accummulate, but also the more soluble unsaturated soaps.

However, a too high surfactant content causes a too strong dispersion of the pigment particles, which will then no longer be discharged in the flotation process. The fibre suspension is no longer sufficiently cleaned, so that in a continuous process there will eventually occur the familiar and feared deterioration of the degree of whiteness. This disadvantage is not displayed by the invention, as the fatty acids in combination with the oleophilic mono- or diesters of polyvalent alcohols of fatty acids will readily find their way into the flotation foam. The anionic surfactant, particularly the α-olefin sulphonate may according to the invention be fed in very small doses and is also largely discharged in the flotation, so that generally even in longer periods of operation its concentration in the circulation water will increase to at most two to three times the original quantity. Furthermore, experiments have shown that even a higher concentration, for instance a concentration to five times the original dose, will not be detrimental to the flotation.

The invention will be further described in, but not limited by the following examples.

## Example 1

General instructions for the preparation of a dispersion:

Fatty acid and for instance glycerin monostearate (GSM) are melted in a separate vessel at 70° - 80°C. In a stirrer vessel water is present (deionized or tap water having a maximum hardness of 5° dH) to which the anionic surfactant is added. The aqueous solution is heated to 65° - 70°C.

The stirrer vessel is fitted with a two-step inclined blade stirrer. At a circumferential speed of the stirrer of 2,6 m/sec the fatty acid - emulsifier melt is slowly introduced into the aqueous phase within about 5 minutes. For homogenization stirring is continued for 10 minutes at about 70°C, after which the temperature is lowered by jacket cooling. From about 50°C crystallization of the finely divided oil phase sets in, and the viscosity of the dispersion increases. To maintain proper recirculation the speed is raised to 5,4 m/sec. Below 40°C the viscosity will again decrease somewhat. To set a lower end viscosity of 30 - 80 mPa.s. a further 0,1 -0,3 % of anionic surfactant are added when the temperature has dropped to 30°C. The stirring speed may then be brought back to 2,6 m/sec to prevent air intake and foam formation.

The fatty acid dispersion prepared in this manner has a particle size of from 5 to 30 um and is storage stable for at least six months.

In the aforesaid manner the following dispersions were prepared in proportions of 30 kg:

Dispersion 1:

20 % of hydrogenated palmitic acid (60 % C16, 40 % C18)
2 % of GMS 60 % monoester
0,65 % of Elfan OS 46 (37 %)

Dispersion 2:

24 % of palmitic acid 92 %
5 % of GMS 45 % monoester
0,75 % of Elfan OS 46 (37 %)


Dispersion 3:

14 % of hydrogenated palm fatty acid (60 % C16, 40 % C18)
10 % of palmitic acid 92 %
2,5 % of GMS 60 % monoester
0,8 % of Elfan OS 46 (37 %)

The remainder consists of 100 % of tap water having a hardness of 3° dH.


Example 2


De-inking tests:

120 g of waste paper mixture consisting of 90 g of newspaper and 30 g of pictorial paper at a consistency of 12 % and a temperature of 45° C were impregnated by the addition of the following chemicals and defibrated for 5 minutes at a consistency of 3,5 %. The hardness of the water was 16° dH.
1,2 % of NaOH
2,0 % of Na-water glass 38° Be
0,2 % of Na$_5$- diethylene triamine pentacetate
1,0 % of hydrogen peroxide (100 %)
0,5 % of fatty acid (molten or as a dispersion)
The above percentages are based on the amount of waste paper.
The subsequent swelling time at 45° C in a slowly moving blade stirrer was 2 hours. After dispersion in an Ultra-Turrax stirrer for 2 minutes the pulp suspension was diluted with water of 16° dH to a consistency of 0,7 % and kept in a laboratory flotation cell for 10 minutes at 35° to 40° C. The cleaned pulp suspension was set to a pH value = 5 using sulphuric acid. In a sheet-forming plant test sheets were prepared and a reflection photometer was used to determine their degree of whiteness.

|  | degree of whiteness |
|---|---|
| before flotation: | 41,1 % |
| palmitic acid 92%, molten | 51,4 % |
| hydrogenated palm fatty acid (60 % C16, 40 % C18) | 51,6 % |
| dispersion 1: | 56,0 % |
| dispersion 2: | 55,8 % |
| dispersion 2: + 5-fold excess of -olefin sulphonate | 55,8 % |
| dispersion 3: | 56,2 % |

The de-inking tests show that according to the invention the degree of whiteness can be increased by 4 to 5 points as compared with that obtained by the process using molten palmitic acid or hydrogenated palm fatty acid.


## Claims

1. An aqueous dispersion useful for de-inking waste paper containing saturated fatty acids, anionic surfactants and nonionic surfactants, characterized in that the nonionic surfactants comprise mono- and/or diesters of polyvalent alcohols of fatty acids having an HLB value of from 3 to 7.

2. A dispersion according to claim 1, characterized in that the dispersion contains as esters glycerin mono- and/or glycerin diesters of saturated carboxylic acids.

3. A dispersion according to claim 2, characterized in that the dispersion contains as glycerin monoester commercial glycerin monostearate having a monoester content of about 45 - 60 %.

4. A dispersion according to claims 1-3, characterized in that of the ester up to 40 mole per cent is substituted with alkyl ester of carboxylic acids.

5. A dispersion according to claim 4, characterized in that the dispersion contains as alkyl ester isopropyl stearate or isopropyl palmitate.

6. A dispersion according to any one of the claims 1-5, characterized in that the dispersion contains as saturated fatty acid palmitic acid.

7. A dispersion according to any one of the claims 1-6, characterized in that the dispersion contains as anionic surfactant sodium salts of α-olefin sulphonates.

8. A process for the preparation of a waste paper de-inking agent in the form of an aqueous fatty acid-containing anionic dispersion, characterized in that essentially saturated fatty acids and mono- and/or diesters of polyvalent alcohols of fatty acids having an HLB value of from about 3 to 7, are processed into a homogeneous melt which is homogeneously mixed with an anionic surfactant-containing aqueous solution.

9. A process according to claim 8, characterized in that the mixing is carried out by introducing the melt into the aqueous anionic surfactant solution and dispersing the fatty acid by stirring.

10. A process according to claim 9, characterized in that stirring is carried out in a commonly applied inclined blade stirrer having a stirring blade/vessel diameter ration of 0,5 to 0,7, at a number of revolutions corresponding to a circumferential speed of 2,5 to 5,5 m/sec.

11. Use of the agent according to any one of the claims 1-7 for de-inking waste paper.

12. Use according to claim 11, characterized in that in the pulper the de-inking agent is added to a waste paper suspension containing caustic soda, water glass, complexing agent and hydrogen peroxide.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 523 592 (I.F.P.) <br> * Claims 1,3-5 * <br> --- | 1 | C 09 D 9/04 |
| Y | CHEMICAL ABSTRACTS, vol. 105, no. 22, 2nd October 1984, abstract no. 193236z, Columbus, Ohio, US; & JP-A-61 89 394 (ASAHI DENKA KOGYO K.K.) 07-05-1986 <br> * Abstract * <br> ------ | 1 | |

TECHNICAL FIELDS SEARCHED (Int. Cl.4)

C 09 D

The present search report has been drawn up for all claims

| Place of search | Date of completion of the search | Examiner |
|---|---|---|
| THE HAGUE | 12-12-1988 | BUSCAGLIONE Y. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)